# EUROPEAN PATENT SPECIFICATION

(11) **EP 3 566 840 B1**
(45) Date of publication and mention of the grant of the patent: **30.06.2021**
(21) Application number: 19173078.7
(22) Date of filing: 07.05.2019
(51) Int. Cl.: B27D 5/00

(54) **OPERATING HEAD FOR MACHINES FOR THE PROCESSING OF COMPONENTS MADE OF WOOD OR THE LIKE**
BEARBEITUNGSKOPF FÜR MASCHINEN FÜR HOLZWERKSTÜCKE ODER ÄHNLICHE MATERIALEN
TÊTE D'USINAGE POUR MACHINE POUR L'USINAGE DE COMPOSANTS DE BOIS OU SIMILAIRES

(30) Priority: 07.05.2018 IT 201800005121
(43) Date of publication of application: 13.11.2019
(73) Proprietor: BIESSE S.p.A., 61122 Pesaro (IT)
(72) Inventor: ANDREATINI, Davide, 61121 PESARO (PU) (IT); ARMILLEI, Daniele, 06025 NOCERA UMBRA (PG) (IT); CONTI, Gianluca, 61034 FOSSOMBRONE (PU) (IT); ROCCHI, Enrico, 61122 PESARO (PU) (IT)
(74) Representative: Manconi, Stefano

(56) References cited:
- GB-A- 2 312 501
- JP-A- H05 169 345
- JP-A- H07 276 184
- US-A- 6 164 881

## Description

### TECHNICAL FIELD

The present invention relates to an operating head for machines for the processing of components made of wood or the like, according to the preamble of claim 1. Such an operating head is known from the document US6164881A1.

### BACKGROUND ART

In the woodworking field, e.g. substantially flat wood panels, it is known to provide a machine of the type comprising an elongated base fitted with two longitudinal guiding members parallel to a substantially horizontal first direction; a plurality of cross members mounted between the longitudinal guiding members parallel to a substantially horizontal second direction transverse to the first direction; at least one supporting block mounted on each cross member to block the panels on a substantially horizontal supporting surface; and an overhead crane, which is mobile along the base in the first direction and extends over the base in the second direction.

The overhead crane supports an operating head, which performs machining of the panels, and is mobile along the overhead crane in the second direction.

Generally, the operating head comprises an electro-spindle, which is mobile in a third direction, substantially vertical and orthogonal to the supporting surface, and is equipped with an output shaft mounted to rotate around a rotation axis.

The output shaft defines a tool-holding spindle, on which a tool assembly provided with at least one tool for machining panels is fitted.

The operating head further comprises a suction hood, which extends around the tool assembly so as to suck shavings and/or swarf generated by the tool; and a pneumatic blowing device comprising, in turn, a plurality of blowing nozzles to clean the surface of the panels from shavings and/or swarf generated by the tool.

Since the blowing nozzles are fixed inside the suction hood, the operating heads for known machines for processing wood components of the type described above have some drawbacks mainly due to the fact that the blowing nozzles have a relatively low effectiveness and efficiency.

### DISCLOSURE OF INVENTION

It is an object of the present invention to provide an operating head for machines for the processing of components made of wood or the like, which overcomes the drawbacks described above and that is simple and inexpensive to manufacture.

According to the present invention, an operating head is provided for machines for the processing of components made of wood or the like, as claimed in the appended claims.

### BRIEF DESCRIPTION OF THE DRAWINGS

The present invention will now be described with reference to the accompanying drawings, illustrating a nonlimiting embodiment thereof, in which:
Figure 1 is a schematic perspective view, with parts removed for clarity, of a machine for the processing of components made of wood or the like provided with a preferred embodiment of the operating head of the present invention;
Figure 2 is a schematic perspective view, with parts removed for clarity, of a detail of the operating head in Figure 1;
Figure 3 is a schematic perspective view, with parts removed for clarity, of a detail of Figure 2; and
Figure 4 is a schematic perspective view, with parts removed for clarity, of a variation of a detail in Figure 3.

### BEST MODE FOR CARRYING OUT THE INVENTION

With reference to the accompanying figures, a machine for the processing of components made of wood or the like defined, in this case, by substantially flat panels 2 made of wood or the like is globally indicated with 1.

The machine 1 comprises an elongated base 3, which extends in a horizontal direction 4, is substantially U-shaped, and has two lateral longitudinal guiding members 5 parallel to the direction 4.

The base 3 supports a plurality of cross members 6, which are referred to in the following description as "working planes", extending between the longitudinal members 5 in a direction 7 which is horizontal and transverse to the direction 4, and slidingly coupled to said longitudinal members 5 so as to be moved, manually or by means of respective known drive devices that are not illustrated, along said longitudinal members 5 in the direction 4.

The working planes 6 support a plurality of supporting blocks 8, which are arranged on the relative working planes 6 substantially according to the dimensions of the panels 2 to be processed and the machining processes to be performed on said panels 2.

Each block 8 is movable along the relative working plane 6 in the direction 7, is coplanar to the other blocks 8 to define a supporting surface P for at least one panel 2, and is connected, in this case, with a pneumatic suction device, known and not illustrated, which is suitable to block the panel 2 on the surface P.

The base 3 further supports an overhead crane 9, comprising a vertical upright member 10, which is coupled to the base 3 in a conventional manner so as to perform, along said base 3 and driven by a conventional drive device that is known and not illustrated, rectilinear movements in the direction 4, and which supports a cross member 11 attached to a free end thereof and extending above the base 3 in the direction 7.

The overhead crane 9 supports an operating head 12, which performs machining operations of the panel 2, and is coupled in a known manner to the cross member 11 so as to perform, with respect to said cross member 11, rectilinear movements in the direction 7.

The overhead crane 9 further supports an edgebanding assembly 13 suitable to edgeband the panel 2 with a finishing edge, which is known and not illustrated.

The head 12 comprises an electro-spindle 14 coupled in a known manner to the head 12 to perform, with respect to the head 12, rectilinear movements in a vertical direction 15 orthogonal to the directions 4 and 7 and to the surface P.

The electro-spindle 14 has an output shaft (not shown), which is mounted to rotate around a rotation axis 16 parallel to the direction 15, and defines a tool-holding spindle capable of receiving and holding a tool assembly 17 equipped with at least one tool for machining panels 2.

The above mentioned tool-holding spindle is fitted with an orienting device 18 comprising a rotary sleeve 19, which is mounted coaxially to the axis 16 and is coupled in a rotary manner to the tool-holding spindle so as to rotate, with respect to the tool-holding spindle, around the axis 16.

The head 12 also comprises a pneumatic blowing device 20 so as to feed a flow of pressurized air through a cutting channel 21 made by the tool assembly 17 in the panel 2 to remove shavings and/or swarf generated by the tool assembly 17.

The device 20 comprises a coupling plate 22 fixed to the sleeve 19, a support bracket 23 rotatingly coupled to the plate 22 so as to rotate, according to the invention with respect to the plate 22, around a rotation axis 24 transversal to the axis 16, and, in this case, two blowing nozzles 25 fixed to said bracket 23.

The head 12 is further provided with a suction hood 26, which extends around the tool assembly 17 and the sleeve 19, is connected with a pneumatic suction device, known and not illustrated, and has an input mouth 27.

According to the invention, the blowing device 20 is mounted between the tool assembly 17 and a deflector , which is mounted within a perimeter of the mouth 27, is oriented so as to direct in the hood 26 shavings and/or swarf not intercepted by the nozzles 25, and is slidingly coupled to the bracket 23 to selectively vary its distance from the panel 2.

Moving the sleeve 19 around the axis 16 allows the nozzles 25 and the deflector 28 to always remain aligned with the tool assembly 17 in one direction of advancement of the tool assembly 17 along the channel 21, the nozzles 25 to correctly feed the flow of pressurized air inside, and through, the channel 21, and the deflector 28 to correctly deflect the shavings and/or swarf inside the hood 26.

According to a non-illustrated variation, each nozzle 25 comprises a flexible segment to selectively orient the blowing nozzle 25 in space.

According to another non-illustrated variation:
the electro-spindle 14 is mounted to rotate, with respect to the head 12, around a further rotation axis parallel to the axis 16, in particular coinciding with said axis 16;

According to the invention, the assembly defined by the pneumatic blowing device 20 and the deflector 28 is angularly integral with the electro-spindle 14 so as to rotate around said further rotation axis.

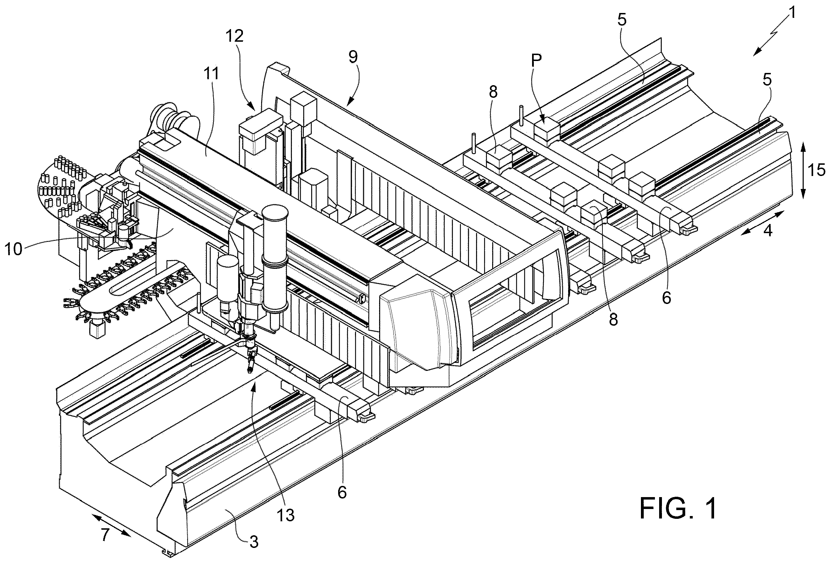

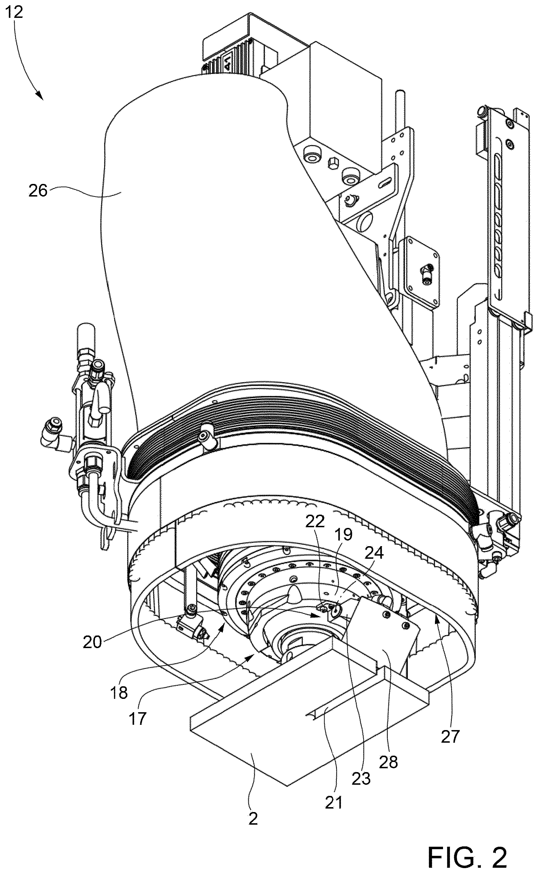

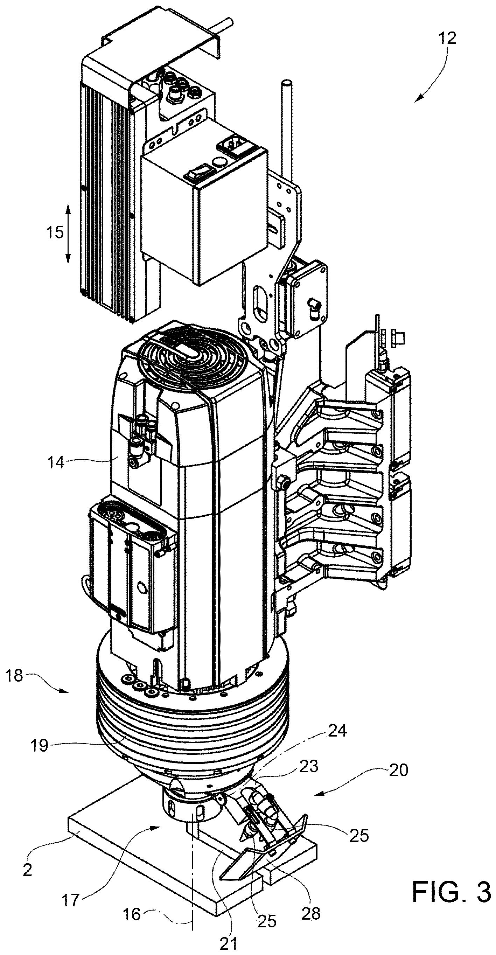

With regard to the above, it should be noted that, in the case illustrated in Figures 1 to 3, the coupling plate 22 is manually fixed to, and removed from, the sleeve 19 by the relevant staff.

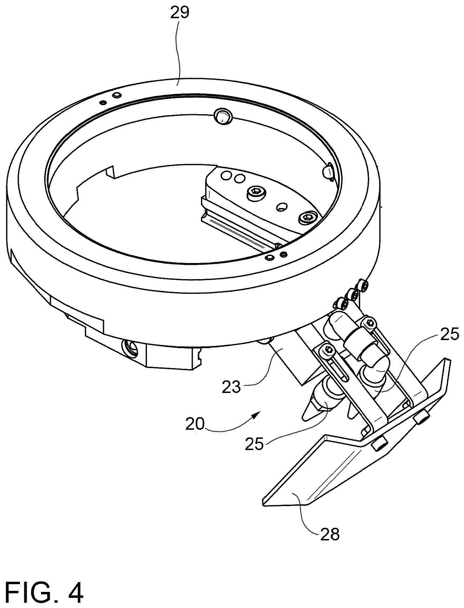

The variation illustrated in Figure 4 differs from the one illustrated in the preceding Figures only in that, therein:
the coupling plate 22 is removed and replaced with a central hub 29 that can be connected in a releasable way to the sleeve 19 as described and illustrated in the Italian patent no. 1336533 fully incorporated herein for reference; and
the assembly defined by the hub 29, the device 20, and the deflector 28 is taken from a tool magazine as described and illustrated in said Italian patent no. 1336533.

## Claims

1. An operating head for machines for the processing of components (2) made of wood or the like, the operating head comprising an electro-spindle (14) provided with an output shaft, which is mounted so as to rotate around a first rotation axis (16) and defines a tool-holding spindle; a tool assembly (17), which is fitted onto the tool-holding spindle and is provided with a tool to process at least one component (2); a suction hood (26), which extends around the tool assembly (17) so as to suck shavings and/or swarf generated by the tool; a deflector (28) to orient into the suction hood (26) the shavings and/or swarf generated by the tool; and a pneumatic blowing device (20) to blow shavings and/or swarf generated by the tool; the pneumatic blowing device (20) being mounted so as to rotate around a second rotation axis parallel to, in particular coinciding with, said first rotation axis (16) and so as to feed a flow of air under pressure into a cutting channel (21) made by the tool in the component (2); and being **characterized in that** the pneumatic blowing device (20) is mounted between the tool and the deflector (28) and **in that** the deflector (28) is mounted so as to rotate, relative to the electro-spindle (14), around a third rotation axis (24), which is substantially transverse to the first rotation axis (16).

2. The operating head according to claim 1, wherein the pneumatic blowing device (20) is coupled to the electro-spindle (14) in a rotary manner so as to move, relative to the electro-spindle (14) itself, around the second rotation axis.

3. The operating head according to claim 1, wherein the electro-spindle (14) is mounted so as to rotate around the second rotation axis and the pneumatic blowing device (20) is coupled to the electro-spindle (14) in an angularly fixed manner so as to rotate around the second rotation axis.

4. The operating head according to any one of the preceding claims, wherein the pneumatic blowing device (20) comprises at least one blowing nozzle (25), which is connected to a source of air under pressure.

5. The operating head according to claim 4, wherein the blowing nozzle (25) is mounted so as to rotate, relative to the electro-spindle (14), around a third rotation axis (24), which is substantially transverse to the first rotation axis (16).

6. The operating head according to claim 4 or 5, wherein the blowing nozzle (25) comprises a flexible segment to selectively orient the blowing nozzle (25).

7. The operating head according to any one of the preceding claims and further comprising an orienting device (18) comprising, in turn, a rotary sleeve (19) fitted in a rotary manner on the tool-holding spindle so as to rotate around the first rotation axis (16); the pneumatic blowing device (20) being fixed to the rotary sleeve (19) so as to rotate around the first rotation axis (16).

8. The operating head according to claim 7, wherein the deflector (28) is fixed to the rotary sleeve (19) of the orienting device (18) so as to rotate around the first rotation axis (16).

9. The operating head according to any one of the preceding claims, wherein the deflector (28) is mounted so as to rotate around the second rotation axis.

## Patentansprüche

1. Bearbeitungskopf für Maschinen für Holzwerkstücke (2) oder ähnliche Materialien, umfassend eine Elektro-Spindel (14) die mit einer Abtriebswelle ausgestattete ist, welche so angebracht ist, dass sie um eine erste Rotationsachse (16) rotiert und eine Werkzeughaltespindel definiert;
eine Werkzeugbaugruppe (17), welche in die Werkzeughaltespindel eingepasst ist und mit einem Werkzeug zur Bearbeitung wenigstens eines Holzwerkstücks (2) ausgestattet ist;
eine Abzugshaube (26), welche sich so um die Werkzeugbaugruppe (17) erstreckt, dass sie vom Werkzeug generierte Späne und/oder Partikel ansaugt;
ein Deflektor (28), um die vom Werkzeug generierten Späne und/oder Partikel in Richtung der Abzugshaube (26) umzulenken; und
eine pneumatische Blaseinrichtung (20), um vom Werkzeug generierte Späne und/oder Partikel fort zu blasen;
die pneumatische Blaseinrichtung (20) ist so angeordnet, dass sie um eine zweite, zur ersten Rotationsachse (16) parallele, insbesondere zusammenfallende Rotationsachse rotiert, und, dass sie einen Luftstrom unter Druck einem vom Werkzeug im Holzwerkstück (2) erzeugten Schneidkanal (21) zuführt;
**dadurch gekennzeichnet, dass**
die pneumatische Blaseinrichtung (20) zwischen dem Werkzeug und dem Deflektor (28) angeordnet ist, und der Deflektor (28) so befestigt ist, dass er relativ zur Elektro-Spindel (14) um eine dritte Rotationsachse (24) rotiert, welche im Wesentlichen quer zur ersten Rotationsachse (16) verläuft.

2. Bearbeitungskopf gemäß Anspruch 1, wobei die pneumatische Blaseinrichtung (20) rotierbar mit der Elektro-Spindel (14) gekoppelt ist, um die pneumatische Blaseinrichtung (20) relativ gegenüber der Elektro-Spindel (14) selbst um die zweite Rotationsachse zu bewegen.

3. Bearbeitungskopf gemäß Anspruch 1, wobei die Elektro-Spindel (14) so befestigt ist, dass sie sich um die zweite Rotationsachse bewegt und die pneumatische Blaseinrichtung (20) zur Rotation um die zweite Rotationsachse winkelfest mit der Elektro-Spindel (14) gekoppelt ist.

4. Bearbeitungskopf gemäß einem der vorhergehenden Ansprüche, wobei die pneumatische Blaseinrichtung (20) wenigstens eine Blasdüse (25) umfasst, welche an eine unter Druck stehende Luftquelle angeschlossen ist.

5. Bearbeitungskopf gemäß Anspruch 4, wobei die Blasdüse (25) so befestigt ist, dass sie relativ gegenüber der Elektro-Spindel (14) um eine dritte Rotationsachse (24) rotiert, welche im Wesentlichen quer zur ersten Rotationsachse (16) verläuft.

6. Bearbeitungskopf gemäß Anspruch 4 oder 5, wobei die Blasdüse (25) ein flexibles Segment umfasst, um die Blasdüse (25) gezielt auszurichten.

7. Bearbeitungskopf gemäß einem der vorhergehenden Ansprüche, zusätzlich umfassend eine Ausrichteinrichtung (18), welche wiederum eine Rotations-Manschette (19) umfasst, die zur Rotation um die erste Rotationsachse (16) drehbar auf der Werkzeughaltespindel montiert ist; wobei die pneumatische Blaseinrichtung (20) zur Rotation um die erste Rotationsachse (16) an der Rotations-Manschette (19) befestigt ist.

8. Bearbeitungskopf gemäß Anspruch 7, wobei der Deflektor (28) so an der Rotations-Manschette (19) der Ausrichteinrichtung (18) befestigt ist, dass er um die erste Rotationsachse (16) rotiert.

9. Bearbeitungskopf gemäß einem der vorhergehenden Ansprüche, wobei der Deflektor (28) so befestigt ist, dass er um die zweite Rotationsachse rotiert.

## Revendications

1. Tête opérationnelle pour machines pour l'usinage de composants (2) en bois ou similaire, la tête opérationnelle comprenant un mandrin électrique (14) prévu avec un arbre de sortie qui est monté afin de tourner autour d'un premier axe de rotation (16) et définit un mandrin porte-outil ; un ensemble d'outil (17) qui est monté sur le mandrin porte-outil et est prévu avec un outil pour usiner le au moins un composant (2) ; une hotte aspirante (26) qui s'étend autour de l'ensemble d'outil (17) afin d'aspirer les coupeaux et/ou les ébarbures générés par l'outil ; un déflecteur (28) pour orienter, dans la hotte aspirante (26), les coupeaux et/ou les ébarbures générés par l'outil ; et un dispositif de soufflage pneumatique (20) pour souffler les coupeaux et/ou les ébarbures générés par l'outil ; le dispositif de soufflage pneumatique (20) étant monté afin de tourner autour d'un deuxième axe de rotation parallèle à, en particulier coïncidant avec ledit premier axe de rotation (16) et afin d'amener un écoulement d'air sous pression dans un canal de coupe (21) réalisé par l'outil dans le composant (2) ; et étant **caractérisée en ce que** le dispositif de soufflage pneumatique (20) est monté entre l'outil et le déflecteur (28) et **en ce que** le déflecteur (28) est monté afin de tourner, par rapport au mandrin électrique (14), autour d'un troisième axe de rotation (24) qui est sensiblement transversal par rapport au premier axe de rotation (16) .

2. Tête opérationnelle selon la revendication 1, dans laquelle le dispositif de soufflage pneumatique (20) est couplé au mandrin électrique (14) d'une manière rotative afin de se déplacer, par rapport au mandrin électrique (14) lui-même, autour du deuxième axe de rotation.

3. Tête opérationnelle selon la revendication 1, dans laquelle le mandrin électrique (14) est monté afin de tourner autour du deuxième axe de rotation et le dispositif de soufflage pneumatique (20) est couplé au mandrin électrique (14) d'une manière fixe du point de vue angulaire afin de tourner autour du deuxième axe de rotation.

4. Tête opérationnelle selon l'une quelconque des revendications précédentes, dans laquelle le dispositif de soufflage pneumatique (20) comprend au moins une buse de soufflage (25) qui est raccordée à une source d'air sous pression.

5. Tête opérationnelle selon la revendication 4, dans laquelle la buse de soufflage (25) est montée afin de tourner, par rapport au mandrin électrique (14), autour d'un troisième axe de rotation (24) qui est sensiblement transversal au premier axe de rotation (16) .

6. Tête opérationnelle selon la revendication 4 ou 5, dans laquelle la buse de soufflage (25) comprend un segment flexible pour orienter sélectivement la buse de soufflage (25).

7. Tête opérationnelle selon l'une quelconque des revendications précédentes et comprenant en outre un dispositif d'orientation (18) comprenant, à son tour, un manchon rotatif (19) monté d'une manière rotative sur le mandrin porte-outil afin de tourner autour du premier axe de rotation (16) ; le dispositif de soufflage pneumatique (20) étant fixé sur le manchon rotatif (19) afin de tourner autour du premier axe de rotation (16).

8. Tête opérationnelle selon la revendication 7, dans laquelle le déflecteur (28) est fixé sur le manchon rotatif (19) du dispositif d'orientation (18) afin de tourner autour du premier axe de rotation (16).

9. Tête opérationnelle selon l'une quelconque des revendications précédentes, dans laquelle le déflecteur (28) est monté afin de tourner autour du deuxième axe de rotation.
